# EUROPÄISCHE PATENTANMELDUNG

(11) **EP 2 759 217 A1**
(43) Veröffentlichungstag der Anmeldung: **30.07.2014**
(21) Anmeldenummer: 13152534.7
(22) Anmeldetag: 24.01.2013
(51) Int. Cl.: A24C 5/39, B65G 53/48, B65G 53/04

(54) **Tabakzuführvorrichtung für die Beschickung einer Tabakverarbeitungsmaschine und Verfahren zur Beschickung**

(71) Anmelder: Köhl Maschinenbau AG, 6868 Wecker (LU)
(72) Erfinder: Köhl, Wilfried, 5489 Ehnen (LU)
(74) Vertreter: GROSSE SCHUMACHER KNAUER VON HIRSCHHAUSEN

(57) **Zusammenfassung**

Die vorliegende Erfindung betrifft eine Tabakzuführvorrichtung (1) für die Beschickung einer Tabakverarbeitungsmaschine mit Tabak (2), wobei die Tabakzuführvorrichtung (1) wenigstens einen Aufnahmebereich (3) für den Tabak (2) und wenigstens eine Fördereinheit (4) zum Befördern des Tabaks (2) vom Aufnahmebereich (3) zur Tabakverarbeitungsmaschine aufweist und wobei die Fördereinheit (4) eine bewegliche Halterung (5) mit einer Transportvorrichtung (6) und einer Lockerungsvorrichtung (7) aufweist, wobei die bewegliche Halterung (5) im Aufnahmebereich (3) frei bewegbar ist und der Tabak (2) mittels der Lockerungsvorrichtung (7) auflockerbar ist, sodass der gelockerte Tabak (2) mittels der Transportvorrichtung (6) zur Tabakverarbeitungsmaschine beförderbar ist. Ferner betrifft die Erfindung ein entsprechendes Verfahren, wobei zunächst Tabak (2) in den Aufnahmebereich (3) aufgegeben wird, der Beschickungsvorgang gestartet wird, die Halterung (5) der Fördereinheit (4) bewegt wird, bis ein Kontakt mit der Oberfläche des Tabaks (2) besteht. Anschließend erfolgt ein Bewegen der Halterung (5) entlang der Oberfläche des Tabaks (2) und/ oder vertikal zur Oberfläche des Tabaks (2) und gleichzeitiges Auflockern des Tabaks (2) mit der an der Halterung (5) angeordneten Lockerungsvorrichtung (7). Der aufgelockerte Tabak (2) wird dann mit der an der Halterung (5) angeordneten Transportvorrichtung (6) befördert.

## Beschreibung

Die vorliegende Erfindung betrifft eine Tabakzuführvorrichtung für die Beschickung einer Tabakverarbeitungsmaschine mit Tabak, wobei die Tabakzuführvorrichtung wenigstens einen Aufnahmebereich für den Tabak und wenigstens eine Fördereinheit zum Befördern des Tabaks vom Aufnahmebereich zur Tabakverarbeitungsmaschine aufweist. Ferner betrifft die vorliegende Erfindung ein Verfahren zum Beschicken einer Tabakverarbeitungsmaschine mit einer Tabakzuführvorrichtung.

Derartige Tabakzuführvorrichtungen bzw. derartige Verfahren zum Beschicken einer Tabakverarbeitungsmaschine mit einer Tabakzuführvorrichtung sind an sich bekannt. In der Regel weisen diese auch "Zusetzer" oder "Feeder" genannten Maschinen einen Aufnahmebereich für den Tabak in Form eines Speichers auf. Der Tabak kann von diesem aus in den gewünschten Mengen der Tabakverarbeitungsmaschine über die Fördereinheit zugeführt werden. Da der Tabak nicht lose, sondern in Behältern, beispielsweise in Kisten oder Säcken, oder Behältnissen mit sogenannten Inlinern, aufgenommen ist, muss der Tabak als erstes in den Speicher der Tabakzuführvorrichtung geleert werden. Um den Tabak dann der Fördereinheit zuzuführen sind in der Regel am Speicher Austragsvorrichtungen vorgesehen, wie beispielsweise Walzen in Kombination mit Förderbändern oder dergleichen. Diese Austragsvorrichtungen haben den Nachteil, dass sie weitere bewegliche Teile darstellen, die zum einen gewartet werden müssen, und zum anderen derart abgedichtet sein müssen, dass kein Schmiermittel oder dergleichen den Tabak verunreinigen kann. Ferner stellte es ein Problem dar, dass Tabakreste im Speicher verbleiben können, da diese durch die Austragsvorrichtung nicht erreicht werden bzw. nicht ausgetragen werden können. Insbesondere bei einem Sortenwechsel muss daher der Speicher aufwändig gesäubert werden, um eine Durchmischung zu verhindern.

Ein weiteres Problem bei den bekannten Tabakzuführvorrichtungen ist eine mögliche Degradierung des Tabaks. Durch die einhergehende erhöhte Zerstörung der Tabakfasern kann es zu einer verminderten Endproduktqualität kommen.

Auch ist es bei den bekannten Austragsvorrichtungen mitunter problematisch die gewünschte Menge an Tabak abzudosieren. Ist ein Wechsel der Tabaksorte gewünscht, muss zunächst der gesamte Speicher geleert werden, bevor der Wechsel durch Einbringen der neuen Sorte durchgeführt werden kann. Zudem kann die Abdosierung der gewünschten Menge erschwert werden durch beispielsweise verpresste oder zusammenhängende Tabakklumpen, die im Tabak enthalten sind.

Weitere Nachteile derartiger Tabakzuführvorrichtungen rühren daher, dass die Behälter in den Speicher entleert werden müssen und dass beim Leeren der Behälter eine erhöhte Staubentwicklung auftritt. Ferner ist auch beim mechanischen Herauslösen bzw. Austragen und anschließenden Befördern des Tabaks mit der Fördereinheit ebenfalls eine erhöhte und unerwünschte Staubentwicklung zu beobachten.

Aus dem Stand der Technik sind daher Lösungen bekannt, bei welchen relativ aufwändige Maßnahmen zur Staubreduktion getroffen werden, bspw. durch spezielle Entleerungsvorrichtungen oder Fördereinheiten. Diese Lösungen tragen auch signifikant zur Staubreduktion bei, jedoch fallen für diese zusätzlichen Vorrichtungen wiederrum Wartungskosten an oder der Anschaffungspreis erhöht sich merklich.

Daher ist es die Aufgabe der vorliegenden Erfindung, eine Tabakzuführvorrichtung aufzuzeigen, mit welcher die Beschickung der Tabakverarbeitungsmaschine noch effizienter gestaltet werden kann. Ferner ist es auch Aufgabe der vorliegenden Erfindung, ein entsprechendes Verfahren zum Beschicken einer Tabakverarbeitungsmaschine aufzuzeigen.

Die Lösung der Aufgabe gelingt vorrichtungsseitig mit einer Tabakzuführvorrichtung gemäß Anspruch 1 und verfahrensseitig mit einem Verfahren zum Beschicken einer Tabakverarbeitungsmaschine gemäß Anspruch 10. Vorteilhafte Weiterbildungen sind in den Unteransprüchen beschrieben.

Die erfindungsgemäße Tabakzuführvorrichtung zeichnet sich gegenüber den eingangs geschilderten Tabakzuführvorrichtungen dadurch aus, dass die Fördereinheit eine bewegliche Halterung mit einer Transportvorrichtung und einer Lockerungsvorrichtung aufweist. Die bewegliche Halterung ist im Aufnahmebereich frei bewegbar. Der Tabak ist mittels der Lockerungsvorrichtung auflockerbar, sodass der gelockerte Tabak mittels der Transportvorrichtung zur Tabakverarbeitungsmaschine beförderbar ist. Hierdurch ergibt sich zum einen der Vorteil, dass auf eine spezielle Austragsvorrichtung verzichtet werden kann und zum anderen, dass die Halterung im gesamten Aufnahmebereich bewegbar ist, sodass kein Tabak im Aufnahmebereich verbleiben und dieser vollständig entleert werden kann. Die Lockerungsvorrichtung trägt ferner dazu bei, dass die gewünschte Menge an Tabak befördert wird, und verpresste oder zusammenhängende Tabakklumpen aufgelöst und der gelöste Tabak weiterbefördert werden.

Weiterbildend weist die Tabakzuführvorrichtung einen Unterdruckerzeuger auf und die Transportvorrichtung weist weiterbildend ein Saugstück auf, wobei der Unterdruckerzeuger einen Unterdruck im Saugstück zum Befördern des gelockerten Tabaks erzeugt. Mit anderen Worten wird also eine pneumatische Beförderung des Tabaks durch die Transportvorrichtung erzielt. Die Saugvorrichtung kann mit der Halterung an der gewünschten Stelle im Aufnahmebereich positioniert werden, sodass eine gezielte und schnelle Beförderung des gelockerten Tabaks erreicht wird, ohne das zusätzlicher Staub entsteht bzw. dieser wird direkt mit dem Tabak abgesaugt. Hierbei ist auch denkbar, dass eine Entleerung von in der Transportvorrichtung verbleibenden Tabakresten nach der Beendigung des Beschickungsvorgangs erfolgen kann.

Zweckmäßigerweise ist das Saugstück über einen flexiblen Schlauch mit einer Anschlussstelle der Tabakverarbeitungsmaschine verbunden ist. Dadurch wird eine absolut freie Beweglichkeit der Halterung gewährleistet.

Es ist von Vorteil, wenn die Lockerungsvorrichtung am Saugstück angeordnet ist. Somit wird der gelockerte Tabak direkt dem Saugstück zugeführt und zur Tabakverarbeitungsmaschine befördert. Auch kann so eine etwaige Staubentwicklung durch den Lockerungsvorgang verhindert werden, da möglicherweise entstehender Staub ebenfalls durch das Saugstück aufgenommen wird.

Weiterbildend weist die Lockerungsvorrichtung einen Werkzeugkopf zum Lockern des Tabaks und einen Antrieb auf, wobei der Antrieb den Werkzeugkopf in eine Bewegung, insbesondere eine Drehbewegung, versetzt. Durch die durch den Antrieb erzeugte Bewegung wird der Tabak gelockert und anschließend durch die Transportvorrichtung befördert. Hierbei ist es besonders von Vorteil, wenn die Lockerungsvorrichtung direkt am Kopf der Transportvorrichtung bzw. des Saugstücks angeordnet ist, wobei die Geschwindigkeit beispielsweise durch einen Frequenzumrichter geregelt wird. Auch ist es denkbar, dass der Werkzeugkopf entsprechende Aufnahmen aufweist, sodass unterschiedliche Werkzeuge zum Einsatz kommen können.

Es ist zweckmäßig wenn der Aufnahmebereich wenigstens zwei Stellplätze für Tabak-Transportbehältnisse aufweist. Dies hat den Vorteil, dass der Tabak nicht mehr in einen Speicher oder dergleichen entleert werden muss, sondern direkt im Transportbehältnis im Aufnahmebereich platziert werden kann. Somit entfällt eine aufwändige Reinigung des Speichers und ein schneller und einfacher Sortenwechsel ist ohne weiteres möglich, ohne dass es zu einer unerwünschten Sortenvermischung kommen kann. Insbesondere wenn mehre Stellplätze vorgesehen sind, können auch mehrere verschiedene Tabaksorten im Aufnahmebereich platziert werden. Die verschiedenen Tabaksorten in den verschiedenen Stellplätzen im Aufnahmebereich können frei angefahren werden. Hierfür ist es zweckmäßig, dass Rohrweichen und/ oder ein Rohrbahnhof vorgesehen sind, sodass ein Wechsel zwischen den Stellplätzen ohne großen Aufwand möglich ist. Denkbar ist auch, dass für jeden Stellplatz eine Halterung vorgesehen ist.

Vorteilhafterweise weist wenigstens ein Tabak-Transportbehältnis einen tütenähnlichen Inliner auf, wobei die Tabakzuführvorrichtung wenigstens zwei, vorzugsweise vier, Spreizmittel aufweist, und wobei die Spreizmittel den Inliner innerhalb des Tabak-Transportbehältnisses fixieren. Dies hat den Vorteil, dass ein Ansaugen des tütenähnlichen Inliners während des Beschickungsvorgangs wirksam verhindert werden kann.

Weiterbildend weist die Tabakzuführvorrichtung wenigstens einen Sensor zum Feststellen der Belegung der wenigstens zwei Stellplätze auf. Somit kann direkt festgestellt werden, ob ein Tabak-Transportbehältnis auf einem Stellplatz steht. Es ist auch denkbar, dass die Tabakzuführvorrichtung einen weiteren Sensor aufweist, der die Sorte des Tabaks über geeignete Mittel, bspw. über einen Barcode oder einen RFID-Chip, erkennt.

Es ist von Vorteil, wenn die Fördereinheit eine Robotereinheit ist, wobei die bewegliche Halterung Teil der Robotereinheit ist. Insbesondere kann die bewegliche Halterung in Form eines Arms ausgebildet sein. Eine Robotereinheit hat den Vorteil, dass diese entsprechend der Begebenheiten programmierbar ist. Zudem sind geeignete Robotereinheiten in vielzähligen Varianten verfügbar.

Zweckmäßigerweise weist die Tabakzuführvorrichtung Mittel zur Bestimmung der Menge des geförderten gelockerten Tabaks und/ oder des im Aufnahmebereich verbliebenen Tabaks auf. Dadurch kann die gewünschte Menge an Tabak direkt abdosiert werden, sodass eine genaue und präzise Beschickung der Tabakverarbeitungsmaschine erfolgen kann. Auch kann so festgestellt werden, wie viel Tabak noch im Aufnahmebereich vorhanden ist, sodass ein Wechsel bzw. ein Nachfüllen bereits frühzeitig vorbereitet werden kann. Die Mittel zur Bestimmung der Menge des geförderten gelockerten Tabaks können beispielsweise als Waage oder als berührungsloser Ultraschall- oder Radarfüllstandsmesser ausgebildet sein.

Des Weiteren ist es zweckmäßig, wenn die Halterung ein optisches Mittel aufweist, um so die Halterung bzw. den daran befestigten Werkzeugkopf in Kontakt mit der Oberfläche des Tabaks bringen zu können. Das optische Mittel kann somit feststellen, ob ein Kontakt der Halterung bzw. des Werkzeugkopfes mit der Oberfläche des Tabaks besteht.

Auch ist es denkbar, dass ein Vakuumschalter vorgesehen ist, sodass eine Verstopfung in einem der Teile der Fördereinheit schnell detektiert und behoben werden kann. Im Falle einer Verstopfung fährt die Halterung in eine Serviceposition, von wo aus die Verstopfung manuell behoben werden kann, beispielsweise in die Nähe einer Serviceklappe oder dergleichen. Ferner ist es sinnvoll, wenn die Fördereinheit zur Reinigung eine oder mehrere Zugangsöffnungen aufweist.

Verfahrensseitig gelingt die Lösung der Aufgabe mit einem Verfahren zum Beschicken einer Tabakverarbeitungsmaschine mit einer Tabakzuführvorrichtung, wobei das Verfahren die folgenden Schritte aufweist:
a) Aufgeben von Tabak in einen Aufnahmebereich der Tabakzuführvorrichtung;
b) Starten des Beschickungsvorgangs;
c) Bewegen einer Halterung einer Fördereinheit der Tabakzuführvorrichtung bis ein Kontakt der Halterung mit dem Tabak besteht;
d) Bewegen der Halterung entlang der Oberfläche des Tabaks und/ oder vertikal zur Oberfläche des Tabaks und gleichzeitiges Auflockern des Tabaks mit einer an der Halterung angeordneten Lockerungsvorrichtung; und
e) Beförderung des aufgelockerten Tabaks mit einer an der Halterung angeordneten Transportvorrichtung.

Auch verfahrensseitig ist es vorteilhaft, wenn der gelockerte Tabak durch einen an der Transportvorrichtung angelegten Unterdruck befördert wird. Entsprechend ist es auch zweckmäßig, wenn der Tabak über eine Bewegung, insbesondere eine Drehbewegung eines Werkzeugkopfs einer Lockerungsvorrichtung gelockert wird. Ferner ist es auch zweckmäßig, dass die Kontaktierung der Halterung mit der Oberfläche des Tabaks durch ein optisches Mittel, beispielsweise eine visuelle Optik, ermöglicht bzw. überwacht wird.

Besonders vorteilhaft ist es, wenn die Halterung zur Auflockerung und Beförderung des Tabaks sinusförmig, mäanderförmig oder in ähnlichen Schlangenbewegungen über die Oberfläche des Tabaks bewegt wird. Somit kann der Tabak sukzessive von der Oberfläche abgenommen werden. Hierbei ist es denkbar, dass zunächst eine Oberflächenschicht abgenommen wird, bevor die Halterung insoweit vertikal zugestellt wird, als dass die Oberflächenschicht abgenommen wird, oder das bereits bei der Bewegung der Oberfläche eine kontinuierliche Zustellung in vertikaler Richtung erfolgt.

Auch ist es zweckmäßig, wenn während der Entnahme des aufgelockerten Tabaks mittels der Transportvorrichtung die entnommene Menge des Tabaks und/ oder die im Aufnahmebereich verblieben Menge des Tabaks vorzugsweise kontinuierlich bestimmt wird. Dadurch kann sowohl die Menge an entnommen oder zu entnehmenden Tabak optimal dosiert als auch frühzeitig erkannt werden, dass neuer Tabak in den Aufnahmebereich aufzugeben ist. Die Mengenregelung kann insbesondere über einen Kapazitivsensor erfolgen. Hierfür ist es auch sinnvoll, wenn eine zusätzliche Sicherheitszeit zur Begrenzung der Förderzeit hinterlegt ist.

Weiterbildend werden nach der Beendigung der Beschickung Tabakreste aus der Transportvorrichtung entfernt. Dadurch kann ein schneller Sortenwechsel vorgenommen werden.

Wie bereits vorrichtungsseitig erwähnt, ist es vorteilhaft, wenn der Tabak in Tabak-Transportbehältnissen in den Aufnahmebereich aufgegeben wird. Hierbei ist es vorteilhaft, dass bei der Verwendung von tütenähnlichen Inlinern, die Inliner durch wenigstens zwei, vorzugsweise durch vier Spreizmittel innerhalb des Tabak-Transportbehältnisses vor dem Start des Beschickungsvorgangs fixiert werden. Auch ist es vorteilhaft, wenn vor dem Starten des Beschickungsvorgangs durch wenigstens einen Sensoren überprüft wird, ob Tabak im Aufnahmebereich aufgegeben ist.

Des Weiteren ist es zweckmäßig, wenn vor dem Starten des Beschickungsvorgangs eine Sicherheitseinrichtung manuell geschlossen wird. Hierdurch kann gewährleistet werden, dass der Beschickungsvorgang nicht gestartet wird, wenn sich beispielswiese noch Personen oder Gegenstände im oder Nahe am Aufnahmebereich befinden. Somit kann einerseits das Verletzungsrisiko minimiert werden und andererseits auch eine Beschädigung an der Tabakzuführvorrichtung ausgeschlossen werden.

Nachfolgend wird die Erfindung anhand von in den Figuren näher dargestellten Ausführungsbeispielen erläutert. Hierbei zeigen schematisch:
- Fig. 1: eine perspektivische Ansicht einer erfindungsgemäßen Tabakzuführvorrichtung gemäß einer ersten Ausführungsform;
- Fig. 2: eine perspektivische Ansicht einer erfindungsgemäßen Tabakzuführeinrichtung gemäß eines zweiten Ausführungsform;
- Fig. 3: eine Detailansicht der Halterung der in Fig. 2 gezeigten zweiten Ausführungsform;
- Fig. 4: eine Detailansicht des Saugstücks mit einem ersten am Werkzeugkopf montierten Werkzeug; und
- Fig. 5: eine Detailansicht des Saugstücks mit einem zweiten am Werkzeugkopf montierten Werkzeug.

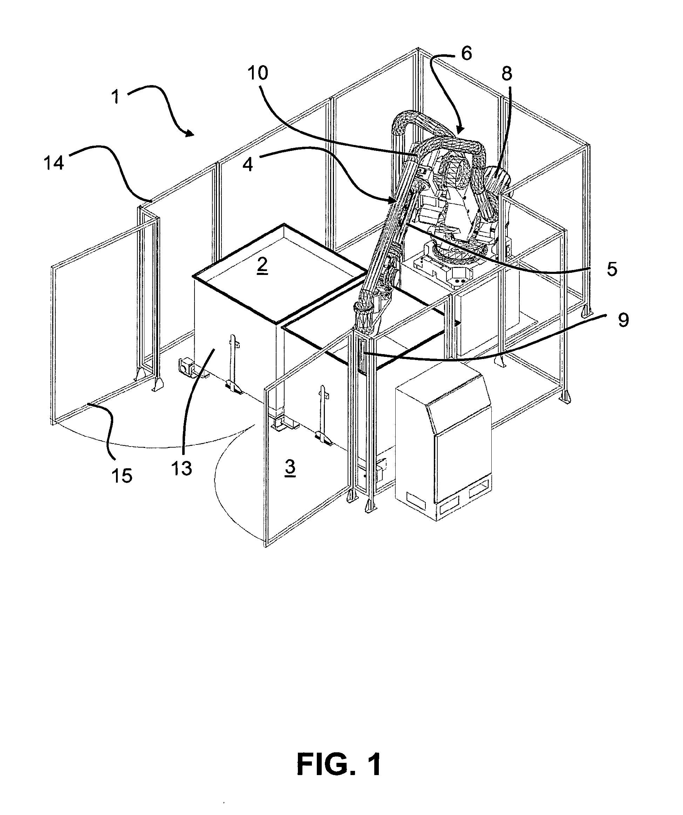

Die in Fig. 1 gezeigte Tabakzuführvorrichtung 1 für die Beschickung einer Tabakverarbeitungsmaschine mit Tabak 2 gemäß der ersten Ausführungsform weist einen Aufnahmebereich 3 für den Tabak 2 auf sowie eine Fördereinheit 4 in Form einer Robotereinheit. Die als Robotereinheit ausgebildete Fördereinheit 4 verfügt über eine bewegliche Halterung 5, die als beweglicher Arm 5 ausgebildet ist, an welchem eine Transportvorrichtung 6 zum Befördern des Tabaks 2 sowie eine Lockerungsvorrichtung 7 angeordnet sind. Die Transportvorrichtung 6 besteht aus einem Unterdruckerzeuger 8, einem Saugstück 9 und einem flexiblen Schlauch 10. Das Saugstück 9 ist am Ende des beweglichen Arms 5 angeordnet und über den flexiblen Schlauch 10 mit einer nicht näher dargestellten Anschlussstelle der Tabakverarbeitungsmaschine verbunden. Der flexible Schlauch 10 wird so am Arm 5 geführt, dass der Arm 5 frei innerhalb des Aufnahmebereichs 3 beweglich ist.

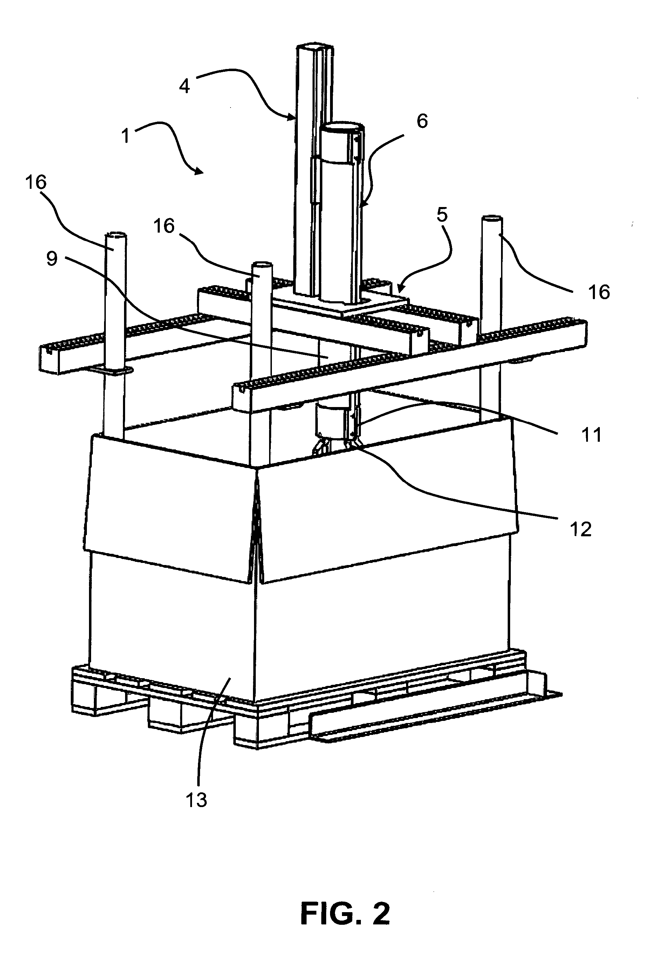

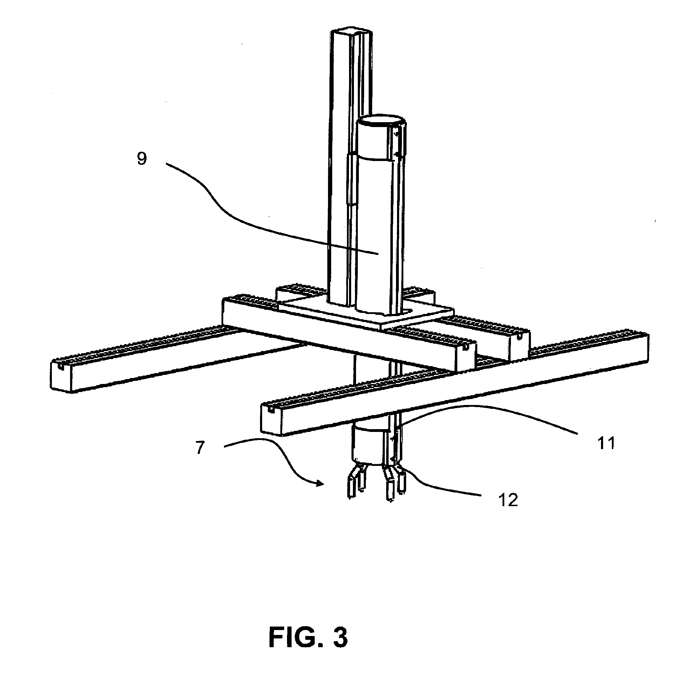

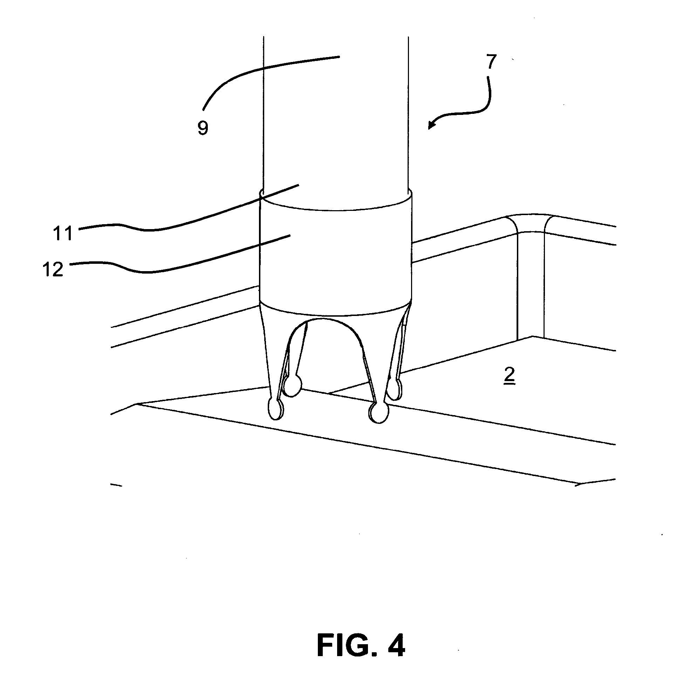

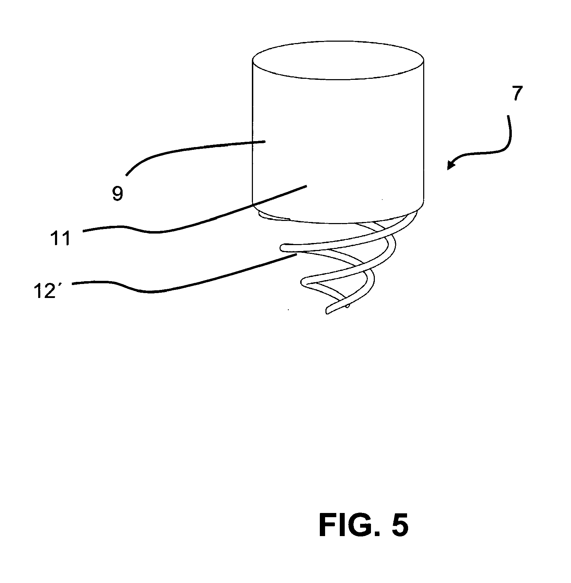

Wie in den Fig. 4 und 5 näher dargestellt, befindet sich am freien Ende des Saugstücks 9, also an dem Ende mit welchem der Tabak 2 aufgenommen wird, die Lockerungsvorrichtung 7. Die Lockerungsvorrichtung 7 weist einen Werkzeugkopf 11 zur Aufnahme verschiedener Werkzeuge auf. In Fig. 2 ist so beispielsweise ein kronenartiges Werkzeug 12 am Werkzeugkopf 11 angebracht. In der alternativen Ausbildungsform nach Fig. 3 ist ein Doppelspiralwerkzeug 12' am Werkzeugkopf 11 angebracht. Das am Werkzeugkopf 11 angebrachte Werkzeug 12, 12' kann durch einen nicht näher dargestellten Antrieb in eine Drehbewegung und/ oder in eine axiale Bewegung entlang der Drehachse Bewegung versetzt werden, sodass die Lockerungsvorrichtung 7 den Tabak 2 auflockern kann.

Der Aufnahmebereich 3 der Tabakzuführvorrichtung 1 weist zwei Stellplätze für Tabak-Transportbehältnisse 13 auf. In diesem Ausführungsbeispiel sind als Tabak-Transportbehältnisse 13 die üblicherweise Verwendung findenden "bins" mit ca. 1 - 2 m³ Volumen dargestellt. Die gesamte Tabakzuführvorrichtung 1 ist in einem Käfig 14 mit einer Flügeltür 15 untergebracht.

In Fig. 2 und Fig. 3 ist eine Tabakzuführvorrichtung 1 gemäß eines zweiten Ausführungsbeispiels gezeigt. Diese unterscheidet sich von der in Fig. 1 gezeigten Tabakzuführvorrichtung 1 dadurch, dass die Fördereinheit 4 eine Halterung 5 in Form einer Lineareinheit aufweist. Diese Lineareinheit ist im Prinzip aus zwei in horizontaler Richtung lineargeführten Schlitten aufgebaut, wobei die Transportvorrichtung 6 in vertikaler Richtung lineargeführt ist. Somit kann die Halterung 5 frei in alle Richtungen bewegt werden.

Ferner weist die in Fig. 2 gezeigte Tabakzuführeinrichtung 1 vier Spreizmittel 16 auf. Diese Spreizmittel 16 können über einen entsprechenden Antrieb, beispielsweise eine Pneumatik, vertikal verfahren werden, sodass ein Inliner, der innerhalb des Tabak-Transportbehältnisses 13 aufgenommen ist, während des Beschickungsvorgangs nicht mitangesaugt wird. In diesem Ausführungsbeispiel sind die Spreizmittel so angeordnet, dass diese genau in die Ecken eines handelsüblichen Kartons, beispielsweise eines handelsüblichen C48-Kartons, einfahren können.

Selbstverständlich können auch anderen Kartongrößen Verwendung finden. In diesem Fall sind die Spreizmittel entsprechend in ihrer Position zu verändern, beispielsweise über eine nicht dargestellte Kulissenführung oder dergleichen, angepasst werden.

Im Folgenden wird nun exemplarisch der Prozess des Beschickens einer Tabakverarbeitungsmaschine mit der in Fig. 1 dargestellten Tabakzuführeinrichtung 1 beschrieben.

Zuerst wird wenigstens ein Tabak-Transportbehältnis 13 in den dafür vorgesehenen Stellplatz im Aufnahmebereich 3 der Tabakzuführvorrichtung 1 aufgegeben. Das Aufgeben erfolgt manuell oder durch ein Flurförderfahrzeug (nicht dargestellt). Anschließend wird das Tabak-Transportbehältnis 13 in seiner Position im Aufnahmebereich 3 durch einen Verriegelungsmechanismus fixiert (nicht dargestellt). Anschließend wird durch ein Identifizierungsmittel, bspw. ein Barcode-Scanner, ein RFID-System oder dergleichen festgestellt, ob das richtige Tabak-Transportbehältnis 13, also die richtige Sorte Tabak 2, in den Aufnahmebereich 3 aufgegeben wurde. Auch dies kann beispielsweise manuell durch das Bedienpersonal erfolgen. Für das zweite Tabak-Transportbehältnis 13 wird entsprechend verfahren.

Nachfolgend wird die Flügeltür 15 des Käfigs 14 geschlossen. Der Innenraum wird mit Schließen der Türen durch geeignete Sensoren überwacht. Durch diese Tätigkeit wird sichergestellt, dass sich keinerlei Personen oder andere Gegenstände innerhalb des Käfigs 14 befinden. Anschließend wird der Beschickungsvorgang, beispielsweise durch Drücken eines entsprechenden Knopfes, durch das Bedienpersonal oder vollautomatisch gestartet.

Der bewegliche Arm 5 der Fördereinheit 4 bewegt sich aus seiner Parkposition in Richtung des ausgewählten Tabak-Transportbehältnisses 13 bis das Saugstück 9 die Oberfläche des Tabaks 2 berührt. Dies wird über einen Näherungs- bzw. Berührungssensor (nicht dargestellt) detektiert. Sodann wird über eine Drehbewegung und/oder axiale Bewegung des Werkzeugkopfes 11 der Lockerungsvorrichtung 7 der Tabak 2 gelockert. Gleichzeitig erzeugt der Unterdruckerzeuger 8 einen Unterdruck am Saugstück 9, sodass der durch die Lockerungsvorrichtung 7 gelockerte Tabak 2 in das Saugstück 9 hineingesaugt wird und über den flexiblen Schlauch 10 zur Tabakverarbeitungsmaschine befördert wird.

Während des Beschickungsvorgangs bewegt sich der bewegliche Arm 5 bzw. das Saugstück 9 mäanderförmig über die Oberfläche des Tabaks 2. Somit wird der Tabak 2 Schicht für Schicht von der Oberfläche her abgetragen. Nachdem die erste Schicht des Tabaks 2 abgetragen ist, wird der Arm 5 bzw. das Saugstück 9 in vertikaler Richtung - also in Richtung zum Boden Tabak-Transportbehältnisses 13 - zugestellt, sodass die nächste Schicht Tabak 2 zur Tabakverarbeitungsmaschine befördert wird.

Sobald das erste Tabak-Transportbehältnis 13 vollständig geleert ist, wird die Robotereinheit 4 den Beschickungsvorgang automatisch mit Leerung des zweiten Tabak-Transportbehältnisses 13 fortführen. Gleichzeitig wird das Bedienpersonal darüber informiert, dass das erste Tabak-Transportbehältnis 13 aus dem Aufnahmebereich 3 zu entfernen ist und ein neues Tabak-Transportbehältnis in den Aufnahmebereich 3 aufzugeben ist, sobald der Beschickungsvorgang beendet ist.

Wenn die gewünscht bzw. voreingestellte Menge an Tabak 2 zur Tabakverarbeitungsmaschine befördert wurde, hebt die Robotereinheit 4 den Arm 5 an und entleert bzw. befreit die Transportvorrichtung von Tabakresten, beispielsweise durch Ausblasen und/oder Schwenkbewegungen des Arms 5. Anschließend fährt der Arm 5 wiederrum in die Parkposition und das Bedienungspersonal kann die Flügeltüren 15 wieder öffnen.

Um eine Qualitätskontrolle zu erreichen bzw. um die beförderte Menge an Tabak 2 zu überwachen, verfügt die Tabakzuführvorrichtung 1 über Mittel zur Erfassung des beförderten Tabaks 2. Dies kann beispielsweise in Form einer Waage am Stellplatz des Tabak-Transportverhältnisses 13 oder durch Durchflussmesser bzw. Volumenstrommesser an der Fördereinheit 4 implementiert sein.

### Bezugszeichenliste

- 1: Tabakzuführvorrichtung
- 2: Tabak
- 3: Aufnahmebereich
- 4: Fördereinheit/ Robotereinheit
- 5: bewegliche Halterung/ beweglicher Arm
- 6: Transportvorrichtung
- 7: Lockerungsvorrichtung
- 8: Unterdruckerzeuger
- 9: Saugstück
- 10: flexibler Schlauch
- 11: Werkzeugkopf
- 12, 12': Werkzeug
- 13: Tabak-Transportbehältnis
- 14: Käfig
- 15: Sicherheitseinrichtung/ Tür
- 16: Spreizmittel

## Patentansprüche

1. Tabakzuführvorrichtung (1) für die Beschickung einer Tabakverarbeitungsmaschine mit Tabak (2), wobei die Tabakzuführvorrichtung (1) wenigstens einen Aufnahmebereich (3) für den Tabak (2) und wenigstens eine Fördereinheit (4) zum Befördern des Tabaks (2) vom Aufnahmebereich (3) zur Tabakverarbeitungsmaschine aufweist,
**dadurch gekennzeichnet, dass**
die Fördereinheit (4) eine bewegliche Halterung (5) mit einer Transportvorrichtung (6) und einer Lockerungsvorrichtung (7) aufweist, wobei die bewegliche Halterung (5) im Aufnahmebereich (3) frei bewegbar ist und der Tabak (2) mittels der Lockerungsvorrichtung (7) auflockerbar ist, sodass der gelockerte Tabak (2) mittels der Transportvorrichtung (6) zur Tabakverarbeitungsmaschine beförderbar ist.

2. Tabakzuführvorrichtung (1) nach Anspruch 1,
**dadurch gekennzeichnet, dass**
die Tabakzuführvorrichtung (1) einen Unterdruckerzeuger (8) aufweist und die Transportvorrichtung (6) ein Saugstück (9) aufweist, wobei der Unterdruckerzeuger (8) einen Unterdruck im Saugstück (9) zum Befördern des gelockerten Tabaks (2) erzeugt.

3. Tabakzuführvorrichtung (1) nach Anspruch 2,
**dadurch gekennzeichnet, dass**
**das Saugstück (9)** über einen flexiblen Schlauch (10) mit einer Anschlussstelle der Tabakverarbeitungsmaschine verbunden ist.

4. Tabakzuführvorrichtung (1) nach einem der vorhergehenden Ansprüche 2 oder 3,
**dadurch gekennzeichnet, dass**
die Lockerungsvorrichtung (7) am Saugstück (9) angeordnet ist.

5. Tabakzuführvorrichtung (1) nach einem der vorhergehenden Ansprüche,
**dadurch gekennzeichnet, dass**
**die Lockerungsvorrichtung (7)** einen Werkzeugkopf (11) zum Lockern des Tabaks (2) und einen Antrieb aufweist, wobei der Antrieb den Werkzeugkopf (11) in eine Bewegung, insbesondere eine Drehbewegung und/oder eine axiale Bewegung, versetzt.

6. Tabakzuführvorrichtung (1) nach einem der vorhergehenden Ansprüche,
**dadurch gekennzeichnet, dass**
der Aufnahmebereich (3) wenigstens zwei Stellplätze für Tabak-Transportbehältnisse (13) aufweist.

7. Tabakzuführvorrichtung (1) nach Anspruch 6,
**dadurch gekennzeichnet, dass**
die Tabakzuführvorrichtung (1) wenigstens einen Sensor zum Feststellen der Belegung der wenigstens zwei Stellplätze aufweist.

8. Tabakzuführvorrichtung (1) nach einem der vorhergehenden Ansprüche 6 oder 7,
**dadurch gekennzeichnet, dass**
wenigstens ein Tabak-Transportbehältnis (13) einen tütenähnlichen Inliner aufweist, und wobei die Tabakzuführvorrichtung (1) wenigstens zwei, vorzugsweise vier, Spreizmittel (16) aufweist, wobei die Spreizmittel den Inliner innerhalb des Tabak-Transportbehältnisses (13) fixieren.

9. Tabakzuführvorrichtung (1) nach einem der vorhergehenden Ansprüche,
**dadurch gekennzeichnet, dass**
die Fördereinheit (4) eine Robotereinheit ist, wobei die bewegliche Halterung Teil (5) der Robotereinheit ist.

10. Tabakzuführvorrichtung (1) nach einem der vorhergehenden Ansprüche,
**dadurch gekennzeichnet, dass**
die Tabakzuführvorrichtung (1) Mittel zur Bestimmung der Menge des geförderten gelockerten Tabaks (2) und/ oder des im Aufnahmebereich (3) verbliebenen Tabaks (2) aufweist.

11. Verfahren zum Beschicken einer Tabakverarbeitungsmaschine mit einer Tabakzuführvorrichtung (1) aufweisend die folgenden Verfahrensschritte:
a) Aufgeben von Tabak (2) in einen Aufnahmebereich (3) der Tabakzuführvorrichtung (2);
b) Starten des Beschickungsvorgangs;
c) Bewegen einer Halterung (5) einer Fördereinheit (4) der Tabakzuführvorrichtung (1) bis ein Kontakt der Halterung (5) mit dem Tabak (2) besteht;
d) Bewegen der Halterung (5) entlang der Oberfläche des Tabaks (2) und/ oder vertikal zur Oberfläche des Tabaks (2) und gleichzeitiges Auflockern des Tabaks (2) mit einer an der Halterung (5) angeordneten Lockerungsvorrichtung (7); und
e) Beförderung des aufgelockerten Tabaks (2) mit einer an der Halterung (5) angeordneten Transportvorrichtung (6).

12. Verfahren nach Anspruch 11,
**dadurch gekennzeichnet dass**
der gelockerte Tabak (2) durch einen an der Transportvorrichtung (1) angelegten Unterdruck befördert wird.

13. Verfahren nach Anspruch 11 oder 12,
**dadurch gekennzeichnet, dass**
der Tabak (2) durch eine Bewegung, insbesondere durch eine Drehbewegung und/oder eine axiale Bewegung, eines mit einem Werkzeug (12, 12') ausgerüsteten Werkzeugkopfs (11) der Lockerungsvorrichtung (7) gelockert wird.

14. Verfahren nach einem der vorhergehenden Ansprüche 11 bis 13,
**dadurch gekennzeichnet, dass**
die Halterung (5) zur Auflockerung und Beförderung des Tabaks (2) vorzugsweise mäander- oder sinusförmig über die Oberfläche des Tabaks (2) bewegt wird.

15. Verfahren nach einem der vorhergehenden Ansprüche 11 bis 14,
**dadurch gekennzeichnet, dass**
während der Entnahme des aufgelockerten Tabaks (2) mittels der Transportvorrichtung (6) die entnommene Menge des Tabaks (2) und/ oder die im Aufnahmebereich (3) verblieben Menge des Tabaks (2) vorzugsweise kontinuierlich bestimmt wird.

16. Verfahren nach einem der vorhergehenden Ansprüche 11 bis 15,
**dadurch gekennzeichnet, dass**
nach Beendigung der Beschickung Tabakreste aus der Transportvorrichtung (6) entfernt werden.

17. Verfahren nach einem der vorhergehenden Ansprüche 11 bis 16,
**dadurch gekennzeichnet, dass**
der Tabak (2) in Tabak-Transportbehältnissen (13) in den Aufnahmebereich (3) aufgegeben wird.

18. Verfahren nach Anspruch 17,
**dadurch gekennzeichnet, dass**
ein Inliner, vorzugsweise in Tütenform, im Tabak-Transportbehältnis (13) aufgenommen ist, wobei der Inliner vor dem Starten des Beschickungsvorgangs durch wenigstens zwei Spreizmittel (16) der Tabakzuführvorrichtung (1) im Tabak-Transportbehältnis (13) fixiert wird.

19. Verfahren nach einem der vorhergehenden Ansprüche 11 bis 18,
**dadurch gekennzeichnet, dass**
vor dem Starten des Beschickungsvorgangs durch wenigstens einen Sensor überprüft wird, ob Tabak (2) im Aufnahmebereich (3) aufgegeben ist.

20. Verfahren nach einem der vorhergehenden Ansprüche 11 bis 19,
**dadurch gekennzeichnet, dass**
vor dem Starten des Beschickungsvorgangs eine Sicherheitseinrichtung (14) manuell geschlossen wird.
